# EUROPÄISCHE PATENTSCHRIFT

(11) **EP 1 022 544 B1**
(45) Veröffentlichungstag und Bekanntmachung des Hinweises auf die Patenterteilung: **31.03.2004**
(21) Anmeldenummer: 99440378.0
(22) Anmeldetag: 27.12.1999
(51) Int. Cl.: G08G 1/0968, G01C 21/26, G08G 1/127

(54) **Verfahren und Vorrichtung zur fahrzeuginternen Feststellung, ob sich das Fahrzeug innerhalb eines geographischen Gebietes befindet**
Method and device to determine internally in a vehicle if the vehicle is situated in a certain geographical region
Procédé et appareil de détermination interne au véhicule si le véhicule se situe à l'intérieur d'une région géographique

(30) Priorität: 19.01.1999 DE 19901800
(43) Veröffentlichungstag der Anmeldung: 26.07.2000
(73) Patentinhaber: ALCATEL, 75008 Paris (FR)
(72) Erfinder: Oster, Martin, 2202 Königsbrunn (AT); Patka, Heinz, 1220 Vienna (AT); Schiehser, Günter, 1190 Vienna (AT); Weisbier, Peter, 1030 Vienna (AT)
(74) Vertreter: Brose, Gerhard, Dipl.-Ing.

(56) Entgegenhaltungen:
- WO-A-95/14908
- DE-A- 2 501 176
- DE-A- 4 433 613
- DE-A- 19 651 537

## Beschreibung

Die Erfindung betrifft ein Verfahren gemäß dem Oberbegriff des Anspruchs 1 sowie eine diesbezügliche Vorrichtung gemäß dem Oberbegriff des Anspruchs 4, wie sie aus der DE-A- 44 33 613 bekannt sind.

Die Frage der Fahrzeugposition relativ zu einem durch eine geschlossene Kontur definierten geographischen Gebiet ist insbesondere für die Entscheidung, welcher Funkkanal gerade die besten Empfangsbedingungen bietet, von besonderem Interesse. Bei Fahrzeugen einer Fahrzeugflotte besteht das Erfordernis, den Funkverkehr zwischen den einzelnen Fahrzeugen und einer Leitstelle oder einer Zentrale ständig aufrechtzuerhalten. Liniengebundene Fahrzeuge werden von einer Zentrale aus überwacht und müssen daher in regelmäßigen, relativ geringen zeitlichen Abständen ihre momentanen Positionsdaten via Funkverbindung an die Zentrale übermitteln. Diese Daten benötigt die Zentrale unter anderem für die Ansteuerung von Anzeigetafeln an Haltestellen, wobei die Anzeigetafeln auf diese Weise nicht nur die fahrplanmäßigen Abfahrtszeiten sondern auch die tatsächlich zu erwartenden Abfahrtszeiten signalisieren können. Die Funktionsweise dieser und anderer Systeme hängt von der Kontinuität des Datenflusses ab. Es muß folglich verhindert werden, daß die Funkverbindung zwischen Fahrzeug und Zentrale zusammenbricht, weil das Fahrzeug den Empfangsbereich des gerade eingestellten Funkkanals verlassen hat. Da die Empfangsbereiche von Funkkanälen sich im allgemeinen überlappen, besteht normalerweise ausreichend Spielraum für die rechtzeitige Umschaltung auf einen anderen Funkkanal. Bei Fahrzeugen mit festen Fahrtrouten ist der Umschaltpunkt als Ortsangabe - zum Beispiel zwischen Haltestellen X und Y - vorgegeben und wird von einem OBU (On-Board-Unit) automatisch berücksichtigt. Probleme kann es jedoch bei Routenänderung oder Umleitung geben.

Der Erfindung liegt die Aufgabe zugrunde, ein universell anwendbares Verfahren anzugeben, welches eine sichere Beurteilung hinsichtlich der Fahrzeugposition innerhalb oder außerhalb eines vorgegebenen geographischen Gebietes gestattet.

Erfindungsgemäß wird die Aufgabe durch die kennzeichnenden Merkmale des Anspruchs 1 gelöst. Es ist bekannt, wie mathematisch für einen Punkt zu berechnen ist, ob sich dieser Punkt innerhalb oder außerhalb eines Polygons befindet. Diese Kenntnis macht sich die Erfindung zunutze, indem die Kontur des geographischen Gebietes als Polygon vorgegeben wird. Das Polygon beziehungsweise Vieleck nähert sich mit Zunahme der Anzahl der Ecken immer mehr an die Kontur des Gebietes an - vorausgesetzt es handelt sich um eine stetig gekrümmte Kontur. Je nach Genauigkeitsanforderung kann somit entschieden werden, ob das betreffende Gebiet, zum Beispiel als Viereck, als Achteck oder Dreißigeck zu beschreiben ist.

Eine Vorrichtung zur Durchführung des Verfahrens besteht gemäß Anspruch 4 im wesentlichen aus einem Polygondaten-Speicher, einem Positionsdaten-Ermittlungssystem und einem Rechner zur Verknüpfung der Speicherdaten und der Positionsdaten. Die Polygon-Daten eines jeden Gebietes können zum Beispiel in einzelnen Tabellen oder Registern geordnet sein, deren Adresse eine Zuordnung zu den einzelnen Gebieten darstellt.

Wenn die Polygon-Daten für Empfangsbereiche von Funkkanälen gespeichert sind, ist der Rechner vorzugsweise direkt mit einem Funkkanalwähler verbunden. Der Rechner ermittelt letztlich, zu welcher Polygondaten-Tabelle die Fahrzeugposition paßt. Ein entsprechendes Ausgangssignal des Rechners wird dann verwendet, um den der Polygondaten-Tabelle zugeordneten Funkkanal einzustellen.

Vorzugsweise sind nur aneinandergrenzende Polygone in Speicherdaten umgesetzt. Auf diese Weise kann zu jeder Fahrzeugposition nur ein einziges Polygon gefunden werden. Der Überlappungsbereich von Empfangsbereichen verschiedener Funkkanäle kann zur Vereinfachung der Polygonform, das heißt zur Verringerung der Eckenzahl ausgenutzt werden.

Die Erfindung wird nachfolgend anhand eines figürlich dargestellten Ausführungsbeispiels näher erläutert.

Dargestellt sind zwei Empfangsbereiche 1a und 1b, die zu zwei Funkkanälen gehören. Innerhalb dieser Empfangsbereiche 1a und 1b bewegt sich ein Fahrzeug auf einer Fahrtroute 2 zwischen Haltestellen, von denen zwei mit 3a und 3b bezeichnet sind. Das Fahrzeug ist mit einem OBU (On-Board-Unit) zur Verarbeitung von vorzugsweise satellitengestützt ermittelten Positionsdaten zum Zwecke der Auslösung von Streckenaktionen, beispielsweise Ampelansteuerung oder Haltestellenansage, ausgestattet. Außerdem steht das Fahrzeug in ständigem Funkkontakt mit einer Zentrale. Dieser Funkkontakt dient unter anderem der Übermittlung momentaner Positionsdaten aber auch der Übertragung von Daten und sprachlichen Informationen von der Zentrale an das Fahrzeug. Um gleichmäßig gute Empfangsqualität zu gewährleisten, muß immer gerade der Funkkanal aktiviert sein, in dessen Empfangsbereich das Fahrzeug sich befindet. Der Empfangsbereich 1a beziehungsweise 1b ist dazu als Polygon 4a beziehungsweise 4b mathematisch beschrieben und in einem Registerspeicher abgelegt. Dargestellt sind fünfeckige Polygone 4a und 4b, wobei die beiden Polygone 4a und 4b an einer gemeinsamen Seitenkante 5 direkt aneinandergrenzen. Die Seitenkante 5 stellt dabei eine Sehne beider Empfangsbereiche 1a und 1b dar, welche das gemeinsame Überlappungsgebiet der Empfangsbereiche 1a und 1b zwischen den beiden Schnittstellen 5x und 5y durchschneidet. Es ist ersichtlich, daß das Fahrzeug am Punkt 6 die Schnittkante 5 überfährt und von dem Empfangsbereich 1a in den Empfangsbereich 1b wechselt. Um für jede Position feststellen zu können, ob sich diese innerhalb oder außerhalb des Empfangsbereiches 1a beziehungsweise 1b befindet, dient die Polygon-Hilfskonstruktion, da auf diese Weise in mathematisch sehr einfacher Form eine Verknüpfung der Polygon-Daten und der momentanen Position darüber Aufschluß gibt, ob die momentane Position, beispielsweise der Punkt 6, zum Polygon 4a oder zum Polygon 4b gehört. Diese Berechnung kann der ohnehin vorhandene Rechner des OBU übernehmen. Am Punkt 6 erzeugt der Rechner ein Ausgangssignal, das zur Ansteuerung eines Funkkanalwählers verwendet wird, wodurch an diesem Punkt 6 die Umschaltung auf den zum Empfangsbereich 1b gehörenden Funkkanal automatisch erfolgt. Die Prozedur vollzieht sich in umgekehrter Reihenfolge am Punkt 7, so daß an diesem Punkt 7 der Funkkanal für den Empfangsbereich 1b auf den Funkkanal für den Empfangsbereich 1a umgeschaltet wird.

Es ist auch möglich, daß die Berechnung für alle interessierenden Punkte, insbesondere Haltepunkte und Zwischenpunkte, an denen Streckenaktionen auszulösen sind, vorab - quasi offline - ausgeführt wird. Das OBU speichert dann nicht mehr Polygondaten, sondern Zuordnungen der Punkte zu Empfangsbereichen. Sobald sich diese Zuordnung ändert, schaltet das OBU auf den neuen Funkkanal um. Da der Rechner in der Zentrale und das OBU über die gleiche Information verfügen, schalten beide synchron um und können ohne Unterbrechung weiter kommunizieren.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung die Merkmale der Erfindung umfasst.

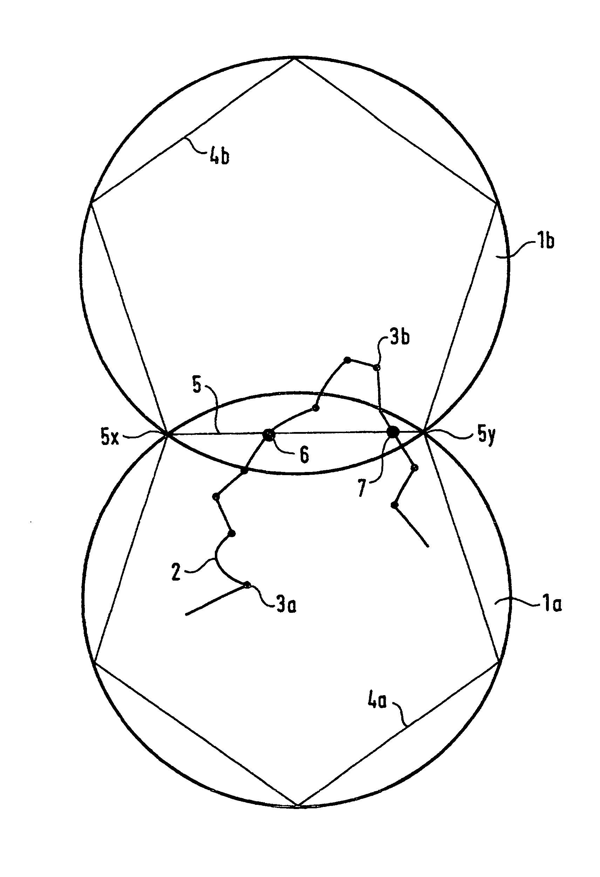

## Patentansprüche

1. Verfahren zur fahrzeuginternen Feststellung, ob sich das Fahrzeug innerhalb oder außerhalb eines Empfangsbereiches (1a, 1b) eines Funkkanals befindet,
**dadurch gekennzeichnet, daß**
das Gebiet dieses Empfangsbereiches (1a, 1b) als Polygon (4a, 4b) mathematisch beschrieben wird und eine Verknüpfung der Polygon-Daten mit der momentanen Position des Fahrzeugs durchgeführt wird.

2. Verfahren nach Anspruch 1, wobei ein Funkkanalwähler (6) angesteuert wird, welcher eine Umschaltung des Funkkanals vornimmt, sobald festgestellt wird, dass das Fahrzeug eine Schnittkante (5) dieses Polygons (4a, 4b) überfährt.

3. Verfahren nach Anspruch 2, wobei zwei benachbarte und sich überlappende Empfangsbereiche (1a, 1b) durch zwei aneinandergrenzende Polygone (4a, 4b) mit einer gemeinsamen Schnittkante (5) beschrieben werden und ein Umschalten des Funkkanals von dem einem in den anderen Empfangsbereich (1a, 1b) erfolgt, wenn diese Schnittkante (5) überfahren wird.

4. Vorrichtung zur Durchführung des Verfahrens nach Anspruch 1,
**dadurch gekennzeichnet, daß**
• ein Speicher zur Speicherung der Polygon-Daten mindestens eines Empfangsbereiches (1a, 1b) eines Funkkanals,
• ein Ortungssystem, insbesondere satellitengestützt, zur Ermittlung der momentanen Position des Fahrzeugs und
• ein Rechner zur Verknüpfung der Polygon-Daten mit der momentanen Position
vorgesehen sind.

5. Vorrichtung nach Anspruch 4, wobei Polygon-Daten der Empfangsbereiche (1a, 1b) von verschiedenen Funkkanälen gespeichert sind, **dadurch gekennzeichnet, daß** der Rechner einen Steuerausgang aufweist, der mit einem Funkkanalwähler zusammenwirkt.

6. Vorrichtung nach Anspruch 4 oder 5, **dadurch gekennzeichnet, daß** die Polygon-Daten aneinandergrenzende Polygone (4a, 4b) beschreiben.

## Claims

1. Method for establishing, inside a vehicle, whether the vehicle is located inside or outside a reception area (1a, 1b) of a radio channel,
**characterised in that**
the region of this reception area (1a, 1b) is mathematically described as a polygon (4a, 4b) and the polygon data are correlated with the current position of the vehicle.

2. Method according to Claim 1, a radio-channel selector (6) being operated which switches over the radio channel as soon as it is established that the vehicle has crossed an edge (5) of this polygon (4a, 4b).

3. Method according to Claim 2, two neighbouring and mutually overlapping reception areas (1a, 1b) being described by two adjacent polygons (4a, 4b) with a common edge (5), and the radio channel being switched over from one of the reception areas (1a, 1b) to the other when this edge (5) is crossed.

4. Device for carrying out the method according to Claim 1, **characterised in that** the following are provided:
• a memory for storing the polygon data of at least one reception area (1a, 1b) of a radio channel,
• a positioning system, in particular a satellite-positioning system, for determining the current position of the vehicle, and
• a computer for correlating the polygon data with the current position.

5. Device according to Claim 4, the polygon data of the reception areas (1a, 1b) of different radio channels being stored, **characterised in that** the computer has a control output which interacts with a radio-channel selector.

6. Device according to Claim 4 or 5, **characterised in that** the polygon data of adjacent polygons (4a, 4b) are described.

## Revendications

1. Procédé permettant de déterminer à bord d'un véhicule si le véhicule se trouve à l'intérieur ou à l'extérieur d'une zone de réception (1a, 1b) d'un canal radio, **caractérisé en ce que** le territoire de cette zone de réception (1a, 1b) est décrite mathématiquement comme un polygone (4a, 4b), et une association des données de polygone avec la position instantanée du véhicule est effectuée.

2. Procédé selon la revendication 1, dans lequel un sélecteur de canal radio (6) est commandé qui procède à une commutation du canal radio dès qu'il est déterminé que le véhicule traverse une arête latérale (5) de ce polygone (4a, 4b).

3. Procédé selon la revendication 2, dans lequel deux zones de réception (1a, 1b) voisines et qui se chevauchent sont décrites par deux polygones (4a, 4b) adjacents avec une arête de section (5) commune, et une commutation du canal radio d'une zone de réception à l'autre (1a, 1b) est effectuée lorsque cette arête de section (5) est traversée.

4. Dispositif permettant de mettre en oeuvre le procédé selon la revendication 1, **caractérisé par**
- une mémoire pour mémoriser les données de polygone au moins d'une zone de réception (1a, 1b) d'un canal radio,
- un système de localisation, en particulier assisté par satellite, pour déterminer la position instantanée du véhicule, et
- un ordinateur pour associer les données de polygone avec la position instantanée.

5. Dispositif selon la revendication 4, dans lequel les données de polygone des zones de réception (1a, 1b) de différents canaux radio sont mémorisées, **caractérisé en ce que** l'ordinateur présente une sortie de commande qui coopère avec un sélecteur de canal radio.

6. Dispositif selon la revendication 4 ou 5, **caractérisé en ce que** les données de polygone décrivent des polygones adjacents (4a, 4b).
